# EUROPÄISCHE PATENTSCHRIFT

(11) **EP 0 550 816 B1**
(45) Veröffentlichungstag und Bekanntmachung des Hinweises auf die Patenterteilung: **06.03.1996**
(21) Anmeldenummer: 92119469.2
(22) Anmeldetag: 13.11.1992
(51) Int. Cl.: G01M 1/04

(54) **Verfahren und Vorrichtung zum Spannen und Lösen eines Rotors an einer von einem Motor angetriebenen Hauptwelle einer Unwuchtmessanordnung**
Method and device for clamping and releasing a rotor from a motor driven main shaft of a balancing arrangement
Méthode et dispositif pour serrer et débloquer un rotor d'un arbre principal entraîné par un moteur d'un arrangement d'équilibrage

(30) Priorität: 09.01.1992 DE 4200380
(43) Veröffentlichungstag der Anmeldung: 14.07.1993
(73) Patentinhaber: HOFMANN WERKSTATT-TECHNIK GMBH, D-64319 Pfungstadt (DE)
(72) Erfinder: Drechsler, Josef, W-6102 Pfungstadt (DE); Goebel, Eickhart, Dipl.-Ing., W-6102 Pfungstadt (DE); Kühn, Gottfried, W-6108 Weiterstadt (DE); Rothamel, Karl, W-6104 Seeheim (DE); Wowes, Jörg, W-6105 Ober-Ramstadt (DE)
(74) Vertreter: Nöth, Heinz, Dipl.-Phys.

(56) Entgegenhaltungen:
- EP-A- 0 056 544
- EP-A- 0 353 434
- DE-A- 2 813 387
- DE-A- 4 000 424

## Beschreibung

Die Erfindung betrifft ein Verfahren nach dem Oberbegriff des Patentansbruchs 1 und eine Vorrichtung nach dem Oberbegriff des Patentanspruchs 4.

Bei einer derartigen aus der DE 40 00 424 A1 bekannten Vorrichtung ist es bekannt, zum Spannen auf die Zugstange mit Hilfe einer Feder eine Zugkraft auszuüben und zum Lösen des aufgespannten Rotors entgegengesetzt zur Federkraft einen Kolben eines pneumatischen Druckzylinders zur Wirkung zu bringen oder beim Spannen den pneumatischen Druckzylinder zu verwenden und beim Lösen entgegengesetzt zur Wirkung des Druckzylinders die Federkraft auszunützen. Ferner ist aus der DE 28 13 387 C2 eine Spannvorrichtung bekannt, bei der mit Hilfe einer pneumatischen Kolbenzylindereinheit eine Zugkraft auf die Zugstange ausgeübt wird und zum Lösen des aufgespannten Rades die Kolbenstange durch Federkraft oder pneumatisch in entgegengesetzter Richtung bewegt wird.

Bei den bekannten Vorrichtungen werden für die Spannvorrichtung und für das Antreiben separate Energieträger in Form von Federelement und/oder Druckluft für das Spannen und Entspannen sowie elektrische Spannung für das Anteiben zu Hilfe genommen. Dies bedingt einen zusätzlichen Aufwand an der Radauswuchtmaschine.

Aufgabe der Erfindung ist es demgegenüber, ein Verfahren und eine Vorrichtung der eingangs genannten Art zu schaffen, für die kein zusätzlicher Aufwand an Energieträgern für das Spannen erforderlich ist.

Diese Aufgabe wird bei dem eingangs genannten Verfahren erfindungsgemäß durch die kennzeichnenden Merkmale des Patentanspruchs 1 und bei der Vorrichtung erfindungsgemäß durch die kennzeichnenden Merkmale des Patentanspruchs 4 gelöst.

Hierdurch wird als Energieträger für das Spannen und Entspannen der ohnehin vorhandene Motor, welcher die Hauptwelle der Radauswuchtmaschine antreibt, eingesetzt. Durch den Wegfall zusätzlicher Energieträger in Form von Federelementen und/oder Drucklufteinrichtungen sind hierfür erforderliche Sicherheitsvorrichtungen ebenfalls entbehrlich. Es entfällt der Aufwand für die Druckluftaufbereitung, die Druckluftbetätigungseinrichtung sowie bei der Instandhaltung der Radauswuchtmaschine zusätzliche Wartungstätigkeiten der pneumatischen Einrichtungen.

Das Spannen des Kraftfahrzeugrades an der Hauptwelle der Radauswuchtmaschine erfolgt mit Hilfe der in axialer Richtung in der Hauptwelle beweglich geführten Zugstange. Um eine Spannbewegung auf die Zugstange zu übertragen, wird das Motordrehmoment des Antriebsmotors über ein Gewinde, welches die Drehbewegung in eine axiale Längsbewegung umwandelt, in der einen Drehrichtung auf die Zugstange übertragen. In vorteilhafter Weise kann dabei eine Drehbewegung der Zugstange innerhalb der Hauptwelle relativ zu dieser verhindert werden. Zum Lösen bzw. Entspannen des aufgespannten Kraftfahrzeugrades wird das Drehmoment des Antriebsmotors über das Gewinde in der entgegengesetzten Drehrichrichtung auf die Zugstange übertragen. Das Gewinde kann dabei als selbsthemmendes Gewinde ausgebildet sein. Zur Bildung des Gewindes kann eine um die Längsachse der Zugstange drehbare Mutter vorgesehen sein, auf die die Drehbewegung des Antriebsmotors übertragen wird. Die Mutter weist einen Eingriff mit einem an der Zugstange vorgesehenen Gewinde auf. Dieser Gewindeeingriff besitzt bevorzugt eine Selbsthemmung, so daß der Spannungszustand erhalten bleibt, auch wenn der Motor nach Beendigung des Spannvorganges ausgeschaltet wird. Das für die Spannbewegung vom Motor vermittelte Drehmoment wird in der gleichen Richtung wie für den Antrieb der Hauptwelle beim Meßlauf auf die Zugstange übertragen, ohne daß eine Drehrichtungsänderung des Motors zwischen Spannvorgang und nachfolgendem Meßlauf erforderlich ist. Hierdurch wird erreicht, daß sich währen der Drehmomentübertragung zum Antreiben des Rades der Spannzustand derselben nicht ändert. Aufgrund der vorerwähnten Selbsthemmung des Gewindes bleibt das Rad auch gespannt, wenn nach Erreichen der End-(Meß-)Drehzahl kaum noch Drehmoment vom Motor übertragen wird. Zum Entspannen wird das Drehmoment des Motors bzw. die Drehbewegung, welche vom Motor vermittelt wird, in entgegengesetzter Drehrichtung auf das Gewinde zwischen Mutter und Zugstange zur Einwirkung gebracht, so daß die Zugstange entgegengesetzt zur Spannrichtung beim Entspannen bewegt wird. Mit Hilfe einer Bremse für die Hauptwelle kann die Hauptwelle während des Spannens und Entspannens festgehalten werden und das drehende Rad nach Beendigung des Meßvorganges abgebremst werden.

Die Mutter, welche in das Gewinde an der Zugstange eingreift, kann an einer Riemenscheibe befestigt sein, über welche die Drehbewegung, welche vom Motor vermittelt wird, auf die Hauptwelle übertragen wird. Die Riemenscheibe kann hierzu an der Hauptwelle drehbar gelagert sein, wobei während des Meßlaufs bei festgespanntem Rad die Drehbewegung über die durch Selbsthemmung mit der Mutter verbundenen Zugstange und das aufgespannte Rad auf die Hauptwelle übertragen wird.

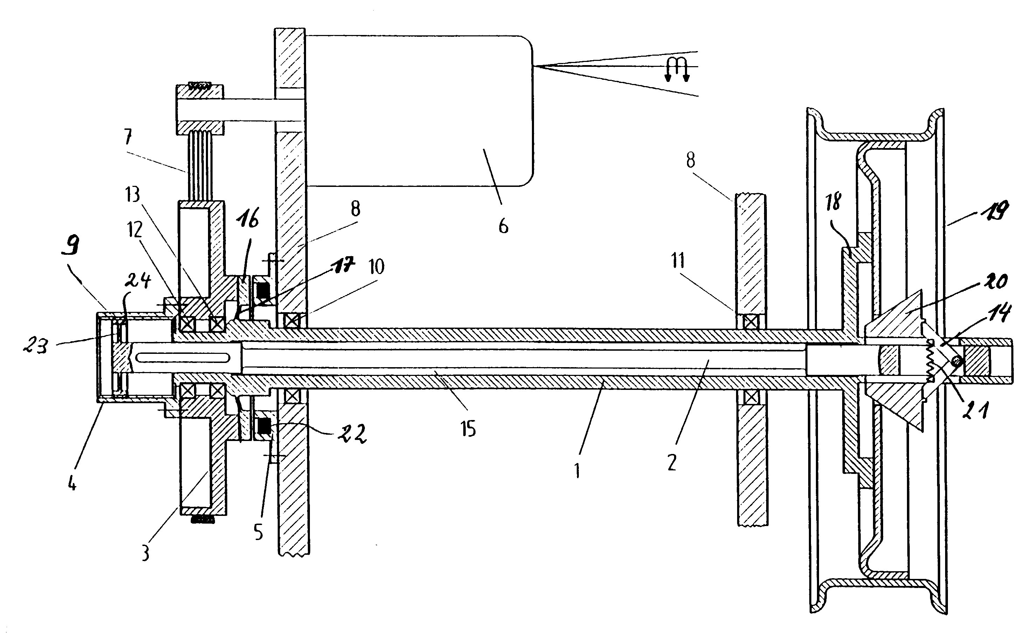

Anhand der Figur wird an einem Ausführungsbeispiel die Erfindung noch näher erläutert. In der Figur sind die wesentlichen Bestandteile der Spannvorrichtung schematisch dargestellt.

Beim dargestellten Ausführungsbeispiel erstreckt sich durch eine Kernlochbohrung 15 einer Hauptwelle 1 einer Radauswuchtmaschine eine axial beweglich geführte Zugstange 2. Die Zugstange 2 ist bevorzugt relativ zur Hauptwelle 1 gegen Verdrehung gesichert. An dem einen über die Hauptwelle 1 hinausragenden Ende (rechtes Ende in der Figur) der Zugtange 2 befindet sich ein Verbindungsmittel 14, an welches eine Aufspanneinrichtung 20 befestigt werden kann. Das Verbindungsmittel 14 ist in Form einer mittels einer Feder 21 spreizbaren Schere ausgebildet. Die Aufspanneinrichtung ist in bekannter Weise ausgebildet und kann mit dem aufzuspannenden Rad 19 in zentrierenden Eingriff an der Hauptwelle 1 gebracht werden. Dabei wird das Rad 19 gegen einen Flansch 18 an der Hauptwelle 1 gedrückt.

Am anderen Ende besitzt die Zugstange 2 ein Gewinde 9. Auf dieses Gewinde 9 greift das Gewinde einer Mutter 4. Das Gewinde 9 ist an einem zylindrischen Gewindeteil 24 vorgesehen. Das Gewindeteil 24 ist über ein Federelement 23 mit dem Zugstangenende verbunden. Dieses Federelement 23 sorgt für einen langsameren Anstieg des Motorstromes und sichert eine bessere Erkennung der Spannkraft. Des weiteren tritt eine Speicherwirkung für die Spannkraft auf wowie eine Reduzierung der Schwungmomente, welche durch abruptes Stoppen des Motors beim Spannen entstehen können.

Beim dargestellten Ausführungsbeispiel ist die Mutter 4 an einer Riemenscheibe 3 befestigt. Die Riemenscheibe 3 ist in Lagern 12 und 13 auf der Hauptwelle 1 drehbar gelagert. Über einen Riemen 7 kann die Riemenscheibe 3 durch einen Motor 9 angetrieben werden.

Die Hauptwelle 1 ist am Rahmen der Auswuchtmaschine oder an Schwingern 8,8 in Lagern 10 und 11 drehbar gelagert. Für das Abbremsen der Hauptwelle 1 ist eine Bremse, bevorzugt eine Elektromagnetbremse, vorgesehen. Ein Stator 5 der Bremse, der einen Elektromagneten 22 aufweist, ist am Maschinenrahmen bzw. an einem der Schwinger 8 befestigt. Ein Anker der Bremse, bevorzugt in Form einer Ankerscheibe 16, ist direkt mit der Hauptwelle über eine Flanschnabe 17 verbunden. Auf diese Weise läßt sich eine direkte Einwirkung der Bremse auf die Hauptwelle 1 erreichen. Diese Bremse dient zum Stillsetzen der Hauptwelle 1 nach dem Meßlauf, ferner als Positionsbremse (Eindrehhilfe) beim Eindrehen des auszuwuchtenden Rotors in die Ausgleichswinkellage sowie als Haltebremse. Darüberhinaus kann die Bremse beim Festspannen und beim Lösen des Rotors zum Blockieren der Hauptwelle verwendet werden.

Beim Spannen und Entspannen des Rotors wird die vom Motor 6 vermittelte Drehbewegung wie folgt bei der dargestellten Spannvorrichtung ausgenützt:

Beim Spannen des Rotors, insbesondere des Rades, an der Hauptwelle 1 wird diese zunächst durch die Bremse blockiert. Hier wird der Elektromagnet 22 gespeist, und die Ankerscheibe 16 liegt am Stator 5 an. Der Motor 6 wird eingeschaltet, und über den Riementrieb 7 und die Riemenscheibe 3 wird die Mutter 4 in Drehung versetzt. Dadurch wird die Zugstange 2 in der Figur nach links bewegt. Das Rad wird dann mit Hilfe der Spanneinrichtung 20 in bekannter Weise zentrisch an der Hauptwelle 1 festgespannt. Die Steigungsrichtung (z.B. Linksgewinde) des Gewindes 9 an der Zugstange 2 und des Innengewindes der Mutter 4 ist so gewählt, daß sich für den Spannvorgang die gleiche Drehrichtung des Motors anwenden läßt, wie beim Meßlauf. Da sich die Mutter 4 nach erfolgter Spannung des gegen den Flansch 18 gedrückten Rades 19 an der Hauptwelle 1 nicht mehr weiter um die Zugstange 2 drehen kann, überträgt sich nun das über die Riemenscheibe 3 vom Motor 6 vermittelte Drehmoment auf die Zugstange 2, den festgespannten Rotor und die Hauptwelle 1, welches sich als miteinander verspannte Einheit nach Lösen der Bremse auf Meßdrehzahl bringen lassen.

In bevorzugter Weise ist die Steigung des Gewindes so ausgelegt, daß Selbsthemmung vorhanden ist. Der gespannte Zustand bleibt dann ohne weitere Einleitung von Motorkraft bestehen. Der Abschaltzeitpunkt des Motors (6) nach dem Spannvorgang kann über die Stromaufnahme des Motors, welche sich als erhöhte Stromaufnahme bei beginnender Blockierung des Motors darstellt, oder durch den Beginn einer geringfügigen Drehbewegung der Hauptwelle (1), wenn das Bremsmoment der Bremse kleiner als das Antriebsmoment ist, erkannt werden. Nach dem Meßlauf wird die Hauptwelle 1 mit der direkt auf sie wirkenden Elektromagnetbremse stillgesetzt.

Die Bauteile 17 und 18 der Bremse übernehmen eine zusätzliche Kupplungsfunktion zwischen Hauptwelle 1 und Riemenscheibe 3, wenn die Bremse 5 spannungslos, d.h. gelüftet ist. Der Vorteil hierbei ist, daß das Rad auch mit begrenztem Moment in zum Meßlauf entgegengesetzter Richtung angetrieben werden kann, ohne daß sich die Spanneinrichtung 20 löst.

Für den Entspannvorgang wird die Bremse (Bauteile 5, 16, 17) zur Blockierung der Hauptwelle 1 aktiviert, und der Motor wird entgegengesetzt zu der beim Meßlauf angewendeten Drehrichtung eingeschaltet. Dabei wird die Zugstange 2 in der Figur nach rechts bewegt und der Eingriff der mit dem Verbindungsmittel 14 verbundenen Spanneinrichtung mit dem aufgespannten Rotor gelöst. Das Erreichen einer Endposition der Zugstange 2 kann durch einen Endschalter oder auf die gleiche Weise wie der Spannzustand erkannt werden, um den Abschaltzeitpunkt des Motors zu bestimmen.

Durch die Erfindung wird durch Wegfall einer Druckluftwartungseinheit und Sicherheitseinrichtungen, wie Sicherheitsmagnetventile für die pneumatische Spannvorrichtung und zusätzlicher Energieträger in Form von Federelementen und/oder pneumatischen Einrichtungen eine erhebliche Einsparung an konstruktivem Aufwand und erforderlichen Bauteilen erreicht.

## Patentansprüche

1. Verfahren zum Spannen und Lösen eines Rotors, insbesondere Kraftfahrzeugrades (19), an einer von einem Motor (6) angetriebenen Hauptwelle (1) einer Unwuchtmeßanordnung, insbesondere Radauswuchtmaschine, mit Hilfe einer in axialer Richtung in der Hauptwelle beweglich geführten Zugstange (2), bei dem die Zugstange an ihrem einen Ende mittels einer Spanneinrichtung mit dem Rotor in Eingriff gebracht wird und am anderen Ende der Zugstange zur Erzeugung einer axialen Spannbewegung eine Zugkraft und zum Lösen des aufgespannten Rotors eine zur Zugkraftrichtung entgegengesetzt wirkende Kraft zur Erzeugung einer der axialen Spannbewegung entgegengesetzt gerichteten Entspannbewegung zur Einwirkung gebracht werden, dadurch gekennzeichnet, daß das Motordrehmoment des Antriebsmotors (6) für die Hauptwelle (1) bei festgehaltener Hauptwelle über ein Gewinde (9) zum Erzeugen der Spannbewegung in der einen Drehrichtung und zum Erzeugen der Entspannbewegung in der anderen Drehrichtung auf die Zugstange übertragen wird.

2. Verfahren nach Anspruch 1, dadurch gekennzeichnet, daß für die Spannbewegung das Motordrehmoment in der gleichen Richtung wie für den Antrieb der Hauptwelle beim Meßlauf auf die Zugstange übertragen wird.

3. Verfahren nach Anspruch 1 oder 2, dadurch gekennzeichnet, daß für die Entspannbewegung das Motordrehmoment entgegengesetzt zur Richtung des Hauptwellenantriebs auf die Zugstange übertragen wird.

4. Vorrichtung zum Spannen und Lösen eines Rotors, insbesondere Kraftfahrzeugrades, an einer von einem Motor (6) angetriebenen Hauptwelle (1) einer Unwuchtmeßanordnung, insbesondere einer Radauswuchtmaschine, mit einer in der Hauptwelle axial beweglich geführten Zugstange (2), einem an einem Ende der Zugstange vorgesehenen Verbindungsmittel (14) für eine Aufspanneinrichtung, welche mit dem aufzuspannenden Rotor in zentrierenden Eingriff bringbar ist, und einer am anderen Ende der Zugstange angreifenden Betätigungseinrichtung, welche eine Zugkraft zum Spannen des Rotors und eine entgegengesetzt gerichtete Kraft zum Lösen des gespannten Rotors auf die Zugstange ausübt, dadurch gekennzeichnet, daß die Betätigungseinrichtung eine um die Längsachse der Zugstange (2) drehbar gelagerte Mutter (4) aufweist, die durch den die Hauptwelle (1) antreibenden Motor (6) drehbar ist und in ein Gewinde (9) an der Zugstange (2) eingreift.

5. Vorrichtung nach Anspruch 4, dadurch gekennzeichnet, daß der Eingriff der Mutter (4) in das Gewinde (9) eine Selbsthemmung aufweist.

6. Vorrichtung nach Anspruch 4 oder 5, dadurch gekennzeichnet, daß die Mutter (4) an einer Riemenscheibe (3) für den Antrieb der Hauptwelle (1) befestigt ist.

7. Vorrichtung nach einem der Ansprüche 4 bis 6, dadurch gekennzeichnet, daß die Riemenscheibe (3) an der Hauptwelle (1) drehbar gelagert ist und daß beim Meßlauf das Drehmoment des Motors (6) über die Zugstange (2) und das festgespannte Rad von der Riemenscheibe (3) auf die Hauptwelle (1) übertragen ist.

8. Vorrichtung nach einem der Ansprüche 4 bis 7, dadurch gekennzeichnet, daß zum Anhalten der Hauptwelle (1) eine Bremse (5, 16, 17) vorgesehen ist.

9. Vorrichtung nach einem der Ansprüche 4 bis 8, dadurch gekennzeichnet, daß zwischen dem Gewinde (9) und der Aufspanneinrichtung (18, 20, 21) ein Federelement (23) vorgesehen ist.

10. Vorrichtung nach einem der Ansprüche 6 bis 9, dadurch gekennzeichnet, daß zwischen der Hauptwelle (1) und der Riemenscheibe (3) bei gelüfteter Bremse (5; 16, 17) durch Teile (16, 17) der Bremse eine Kupplungsfunktion gebildet ist.

## Claims

1. A method of clamping and releasing a rotary member, in particular a motor vehicle wheel (19), on a main shaft (1), which is driven by a motor (16), of an unbalance measuring arrangement, in particular a wheel balancing machine, by means of a pull bar (2) which is guided movably in the axial direction in the main shaft, in which the pull bar is brought into engagement with the rotary member at one end of the pull bar by means of a clamping device and at the other end of the pull bar a pulling force is caused to act to produce an axial clamping movement and to release the clamped rotary member a force which acts in opposite relationship to the direction of the pulling force is caused to act to produce a release movement which is directed in opposite relationship to the axial clamping movement, characterised in that when the main shaft is held fast the motor torque of the drive motor (6) for the main shaft (1) is transmitted by way of a screwthread (9) to the pulling bar to produce the clamping movement in the one direction of rotation and to produce the release movement in the other direction of rotation.

2. A method according to claim 1 characterised in that for the clamping movement the motor torque is transmitted to the pull bar in the same direction as for the drive of the main shaft in the measuring run.

3. A method according to claim 1 or claim 2 characterised in that for the release movement the motor torque is transmitted to the pulling bar in opposite relationship to the direction of the main shaft drive.

4. Apparatus for clamping and releasing a rotary member, in particular a motor vehicle wheel, on a main shaft (1), driven by a motor (6), of an unbalance measuring arrangement, in particular a wheel balancing machine, comprising a pull bar (2) which is axially movably guided in the main shaft, a connecting means (14) provided at one end of the pull bar for a clamping device which can be brought into centering engagement with the rotary member to be clamped, and an actuating means which engages the other end of the pull bar and which applies to the pull bar a pulling force for clamping the rotary member and an oppositely directed force for releasing the clamped rotary member, characterised in that the actuating means has a nut (4) which is mounted rotatably about the longitudinal axis of the pull bar (2) and which is rotatable by the motor (6) driving the main shaft (1) and which engages into a screwthread (9) on the pull bar (2).

5. Apparatus according to claim 4 characterised in that the engagement of the nut (4) into the screwthread (9) has a self-locking effect.

6. Apparatus according to claim 4 or claim 5 characterised in that the nut (4) is fixed to a belt pulley (3) for the drive for the main shaft (1).

7. Apparatus according to one of claims 4 to 6 characterised in that the belt pulley (3) is mounted rotatably on the main shaft (1) and that in the measuring run the torque of the motor (6) is transmitted from the belt pulley (3) to the main shaft (1) by way of the pull bar (2) and the wheel which is clamped fast.

8. Apparatus according to one of claims 4 to 7 characterised in that a brake (5, 16, 17) is provided for stopping the main shaft (1).

9. Apparatus according to one of claims 4 to 8 characterised in that a spring element (23) is provided between the screwthread (9) and the clamping device (18, 20, 21).

10. Apparatus according to one of claism 6 to 9 characterised in that a coupling function is formed between the main shaft (1) and the belt pulley (3) by parts (16, 17) of the brake when the brake (5; 16, 17) is released.

## Revendications

1. Procédé pour bloquer et débloquer un rotor, notamment une roue (19) de véhicule automobile, sur un arbre principal (1), entraîné par un moteur (6), d'un dispositif de mesure du balourd, notamment d'une machine d'équilibrage de roue, à l'aide d'une barre de traction (2), qui est guidée en déplacement dans la direction axiale de l'arbre principal, selon lequel on amène la barre de traction à engrener, par l'une de ses extrémités, avec le rotor à l'aide d'un dispositif de blocage et on fait agir une force de traction à l'autre extrémité de la barre de traction pour produire un déplacement axial de blocage et une force agissant en sens opposé de la direction de la force de traction et servant à produire un déplacement de déblocage dirigé en sens opposé du déplacement axial de blocage, pour débloquer le rotor bloqué, caractérisé par le fait que le couple du moteur d'entraînement (6) de l'arbre principal (1) est transmis à la barre de traction, alors que l'arbre principal est fixe, par l'intermédiaire d'un filetage (9) pour l'obtention du déplacement de blocage dans un sens de rotation et pour l'obtention du déplacement de déblocage dans l'autre sens de rotation.

2. Procédé suivant la revendication 1, caractérisé par le fait que pour le déplacement de blocage, le couple du moteur est transmis à la barre de traction, dans le même sens de rotation que pour l'entraînement de l'arbre principal lors du cycle de mesure.

3. Procédé suivant la revendication 1 ou 2, caractérisé par le fait que pour le déplacement de déblocage, le couple du moteur est transmis à la barre de traction en sens inverse du sens d'entraînement de l'arbre principal.

4. Dispositif de blocage et déblocage d'un rotor, notamment une roue de véhicule automobile, sur un arbre principal, entraîné par un moteur (6), d'un dispositif de mesure du balourd, notamment d'une machine d'équilibrage de roue, comportant une barre de traction (2) guidée de manière à être déplaçable axialement dans l'arbre principal, un moyen de liaison (14) prévu à une extrémité de la barre de traction, pour un dispositif de blocage qui peut être amené à engrener, avec un effet de centrage, avec le rotor devant être bloqué, et un dispositif d'actionnement, qui attaque l'autre extrémité de la barre de traction et applique à la barre de traction une force de traction pour bloquer le rotor et une force dirigée en sens opposé pour débloquer le rotor bloqué, caractérisé par le fait que le dispositif d'actionnement possède un écrou (4) qui est monté de manière à pouvoir tourner autour de l'axe longitudinal de la barre de traction (2), qui peut être entraîné en rotation par le moteur (6) d'entraînement de l'arbre principal (1) et qui engrène dans un filetage (9) présent sur la barre de traction (2).

5. Procédé suivant la revendication 4, caractérisé en ce que l'engrènement de l'écrou (4) dans le filetage (6) est du type autobloquant.

6. Procédé suivant la revendication 4 ou 5, caractérisé par le fait que l'écrou (4) est fixé à une poulie (3) pour l'entraînement de l'arbre principal (1).

7. Procédé suivant l'une des revendications 4 à 6, caractérisé par le fait que la poulie (3) est montée de façon à pouvoir tourner sur l'arbre principal (1) et que lors du cycle de mesure, le couple du moteur (6) est transmis par la poulie (3) de l'arbre principal (1) par l'intermédiaire de la barre de traction (2) et de la roue bloquée fixe.

8. Dispositif suivant l'une des revendications 4 à 7, caractérisé par le fait qu'un frein (16,17) est prévu pour arrêter l'arbre principal (1).

9. Dispositif suivant l'une des revendications 4 à 8, caractérisé par le fait qu'un élément de ressort (23) est prévu entre le filetage (9) et le dispositif de blocage (18, 20,21).

10. Dispositif suivant l'une des revendications 6 à 9, caractérisé par le fait qu'une fonction d'accouplement est établie entre l'arbre principal (1) et la poulie (3) au moyen de parties (16,17) du frein (5; 16, 17) lorsque ce dernier est débloqué.
